# EUROPÄISCHE PATENTSCHRIFT

(11) **EP 1 519 799 B1**
(45) Veröffentlichungstag und Bekanntmachung des Hinweises auf die Patenterteilung: **05.11.2008**
(21) Anmeldenummer: 03761544.0
(22) Anmeldetag: 27.06.2003
(51) Int. Cl.: B21C 23/14, B21C 25/08, B22F 3/20

(54) **STRANGPRESSWERKZEUG ZUR HERSTELLUNG EINES AUS PLASTISCHER MASSE BESTEHENDEN ZYLINDRISCHEN K RPERS**
EXTRUSION PRESS TOOL FOR PRODUCING A CYLINDRICAL BODY CONSISTING OF A PLASTIC MASS
OUTILLAGE D'EXTRUSION SERVANT A LA FABRICATION D'UN CORPS CYLINDRIQUE EN MATIERE PLASTIQUE

(30) Priorität: 29.06.2002 DE 10229325
(43) Veröffentlichungstag der Anmeldung: 06.04.2005
(73) Patentinhaber: Friedrichs, Arno, D-95326 Kulmbach (DE)
(72) Erfinder: Friedrichs, Arno, D-95326 Kulmbach (DE)
(74) Vertreter: Eichstädt, Alfred
(86) Internationale Anmeldenummer: PCT/EP2003/006843
(87) Internationale Veröffentlichungsnummer: WO 2004/002641

(56) Entgegenhaltungen:
- US-A- 2 422 994
- US-A- 3 396 676
- US-A- 5 780 063
- US-B1- 6 248 277
- PATENT ABSTRACTS OF JAPAN vol. 013, no. 418 (M-871), 18. September 1989 (1989-09-18) -& JP 01 156405 A (SUMITOMO ELECTRIC IND LTD;OTHERS: 01), 20. Juni 1989 (1989-06-20)

## Beschreibung

Die Erfindung betrifft ein Strangpresswerkzeug zur Herstellung eines aus plastischer Masse bestehenden zylindrischen Körpers (siehe z.B. US-A-2 422 994).

Aus der DE 41 20 166 C2 ist bereits ein Strangpresswerkzeug zur Herstellung eines Hartmetall- oder Keramikstabes mit gedrallten Innenbohrungen bekannt. Das bekannte Strangpresswerkzeug weist eine Pressdüse auf, deren Mundstück einen glatten zylindrischen Kanal aufweist. Weiterhin ist das bekannte Strangpresswerkzeug mit einem an einem Dorn koaxial innerhalb der Pressdüse angeordneten Träger versehen, der eine der Anzahl der Innenbohrungen entsprechende Anzahl von in das Düsenmundstück hineinragenden elastischen Fäden und/oder Kanälen bzw. Bohrungen zum fadenförmigen Einpressen eines plastischen Materials in den Massestrom aufweist. Diese Fäden, Kanäle oder Bohrungen sind entsprechend der Lage der zumindest einen Innenbohrung in vorbestimmten radialen Abständen von der Achse befestigt bzw. angeordnet. Der Träger ist als flügelloser Nabenkörper ausgebildet. Dem Nabenkörper und/oder dem Düsenmundstück ist eine Antriebseinrichtung zugeordnet, mit der zur Erzeugung des zumindest einen gedrallten Innenkanals im extrudierten Rohling eine vorbestimmte, auf die Auspressgeschwindigkeit der Masse abgestimmte Relativ-Drehbewegung zwischen dem Nabenkörper und dem Düsenmundstück erzeugbar ist.

Weiterhin sind aus der DE 199 42 966 C2 ein Verfahren und eine Vorrichtung zur Herstellung eines Sintermetall-Rohlings mit innenliegenden, wendelförmigen Ausnehmungen bekannt. Dabei wird der plastische Körper zunächst mit einem im wesentlichen geradlinigen Verlauf der Innenausnehmung hergestellt. Danach wird der plastische Körper auf eine vorbestimmte Länge abgelängt und anschließend unter Abstützung über seine ganze Länge auf einer Auflage mittels einer Reibflächenanordnung einer Wälzbewegung unterworfen. Die Geschwindigkeit dieser Wälzbewegung ändert sich über die Länge des Körpers linear und stetig, so dass der Körper gleichmäßig verdrillt wird.

Der Erfindung liegt die Aufgabe zugrunde, die Herstellung eines aus plastischer Masse bestehenden zylindrischen Körpers, der mindestens eine in seinem Inneren verlaufende Ausnehmung hat, zu verbessern.

Diese Aufgabe wird durch ein Strangpresswerkzeug mit den in Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass der radiale Abstand der mindestens einen Innenausnehmung des aus plastischer Masse bestehenden zylindrischen Körpers vom Außenumfang bzw. von der Oberfläche des zylindrischen Körpers schnell und einfach einstellbar ist. Weitere Vorteile der Erfindung ergeben sich aus der nachfolgenden Erläuterung eines Ausführungsbeispiels anhand der Zeichnungen, in welchen die zum Verständnis der Erfindung notwendigen Bestandteile eines Strangpresswerkzeugs dargestellt sind. Es zeigt
- Figur 1: ein erstes Ausführungsbeispiel für die Erfindung
- Figur 2: ein zweites Ausführungsbeispiel für die Erfindung und
- Figur 3: ein drittes Ausführungsbeispiel für die Erfindung.

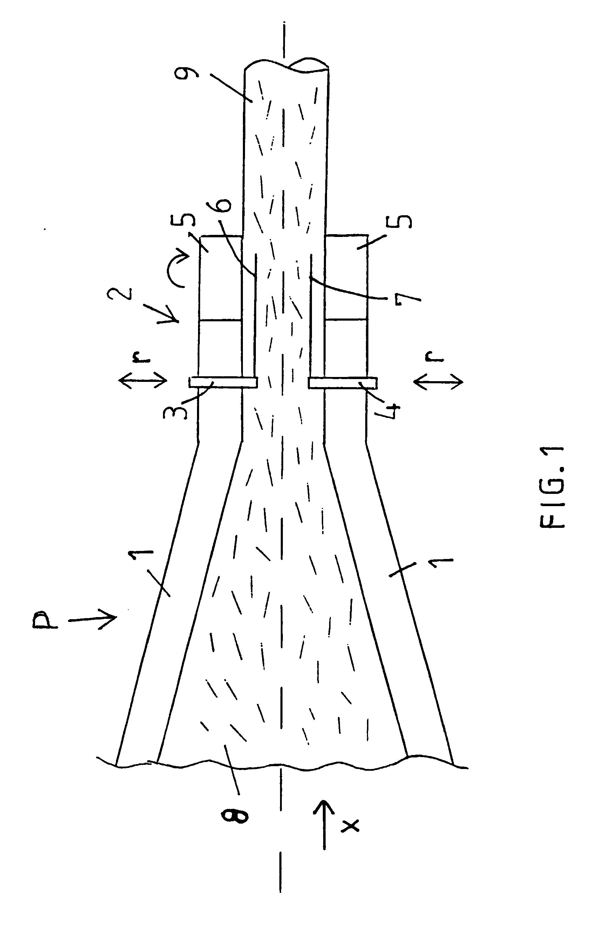

Die Figur 1 zeigt ein erstes Ausführungsbeispiel für die Erfindung. Das dargestellte Strangpresswerkzeug weist eine Pressdüse P auf, die einen sich verschmälernden Bereich 1 und ein Düsenmundstück 2 hat. Das Düsenmundstück 2 bildet einen zylindrischen Kanal. Durch diese Pressdüse wird in Richtung x plastische Masse 8 gedrückt, so dass die das Düsenmundstück verlassende plastische Masse einen aus plastischer Masse bestehenden zylindrischen Körper 9 bildet. Dieser wird dann außerhalb des Presswerkzeugs zur Bildung eines Rohlings auf eine gewünschte Länge abgelängt. Der Rohling wird zu einem Endprodukt weiterverarbeitet, beispielsweise einem Hartmetallstab, einem Keramikstab oder einem Pulverstahlstab, insbesondere einem Bohrwerkzeug.

Der das Düsenmundstück 2 verlassende zylindrische Körper 9 weist in seinem Inneren wendelförmig verlaufende Ausnehmungen auf. Handelt es sich beim Endprodukt um ein Bohrwerkzeug, dann dienen diese Ausnehmungen als Kühlkanäle, durch welche während des Bohrvorganges Kühlflüssigkeit in den Schneiden- bzw. Arbeitsbereichs des Bohrwerkzeugs geleitet wird.

Die Erzeugung dieser wendelförmig verlaufenden Ausnehmungen erfolgt bei einer ersten Ausführungsform der Erfindung unter Verwendung von elastischen Fäden und einem Endbereich 5 des Düsenmundstücks 2, welcher relativ zu dem sich verschmälernden Bereich 1 der Pressdüse P verdrehbar ist bzw. rotierend ausgebildet ist.

In der Figur 1 sind zwei elastische Fäden gezeigt, die mit den Bezugsziffern 6 und 7 versehen sind. Diese elastischen Fäden sind jeweils an einen Fadenhalter 3 bzw. 4 befestigt. Die Fadenhalter, die aus einem Metall bestehen können, sind jeweils stiftförmig ausgebildet, durch eine Bohrung im Düsenmundstück 2 oder eine Bohrung in dem sich verschmälernden Bereich 1 der Pressdüse geführt und an dieser befestigt. Sie ragen bis in den zylindrischen Kanal hinein und sind - wie es durch die Doppelpfeile r angedeutet ist - in Radialrichtung verstellbar. Durch diese Verstellbarkeit ist der Abstand der jeweiligen Innenausnehmung, die aufgrund der Fäden beim Pressvorgang entsteht, von der Oberfläche bzw. dem Außenumfang des zylindrischen Körpers in einfacher Weise einstellbar.

Der das Presswerkzeug verlassende zylindrische Körper 9 weist demnach beim gezeigten Ausführungsbeispiel zwei wendelförmig verlaufende Innenausnehmungen auf.

Die radiale Verstellbarkeit der Fadenhalter 3 und 4 ist entweder durch ein Gewinde im Düsenmundstück 2 bzw. in dem sich verschmälernden Bereich der Pressdüse oder durch einen Stellantrieb gegeben. Die radiale Verstellung kann von einer Bedienperson vorgenommen werden.

Die Länge der Fäden 6 und 7, die Länge des drehbaren Endbereichs 5 des Düsenmundstücks 2 und die Drehgeschwindigkeit des Endbereichs 5 des Düsenmundstücks 2 sind vom jeweiligen Anwendungsfall abhängig und können in Abhängigkeit vom gewünschten Steigungswinkel der wendelförmigen Innenausnehmungen optimiert werden.

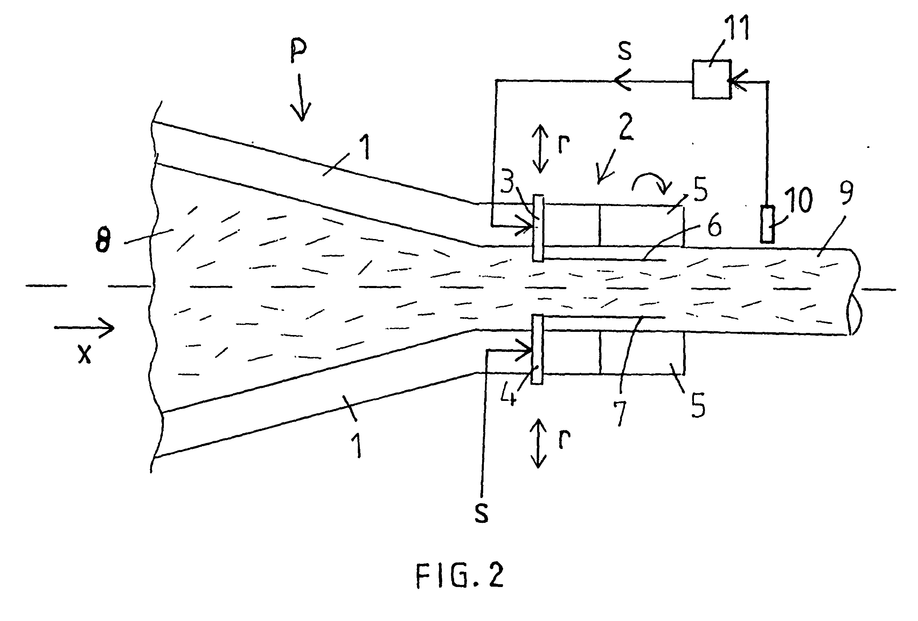

Die Figur 2 zeigt ein zweites Ausführungsbeispiel für die Erfindung. Dieses unterscheidet sich vom ersten Ausführungsbeispiel dadurch, dass außerhalb oder auch innerhalb der Pressdüse ein Sensor 10 vorgesehen ist. Dieser dient zur Erfassung bzw. Ermittlung des Abstands der Innenausnehmungen des Körpers von dessen Außenumfang bzw. Oberfläche. Die Ausgangssignale dieses Sensors werden einer Einstelleinheit 11 zugeführt, die an ihrem Ausgang Einstellsignale s zur Verfügung stellt. Mittels dieser Einstellsignale s erfolgt eine automatische Radialverstellung der Fadenhalter 3 und 4.

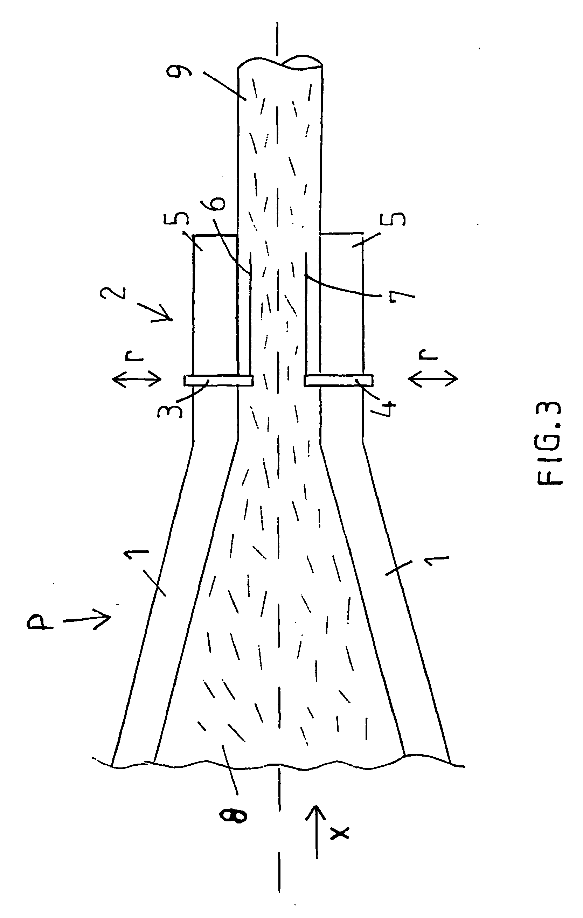

Die Figur 3 zeigt ein drittes Ausführungsbeispiel für die Erfindung. Gemäß diesem dritten Ausführungsbeispiel wird mittels des Strangpresswerkzeugs ein aus plastischer Masse bestehender zylindrischer Körper 9 hergestellt, der in seinem Inneren geradlinig verlaufende Ausnehmungen hat. Bei diesem Ausführungsbeispiel ist das Düsenmundstück 2 einstückig ausgebildet und hat keinen verdrehbaren bzw. rotierenden Endbereich. Der das Strangpresswerkzeug verlassende zylindrische Körper 9 wird zur Bildung eines Rohlings auf eine gewünschte Länge abgelängt. Dieser Rohling kann dann zu einem stabförmigen Endprodukt weiterverarbeitet werden, welches geradlinige Ausnehmungen aufweist. Alternativ dazu kann dieser Rohling auch - wie es in der DE 199 42 966 C2 beschrieben ist - außerhalb des Strangpresswerkzeugs unter Abstützung über seine gesamte Länge auf einer Auflage mittels einer Reibflächenanordnung einer Wälzbewegung unterworfen werden, so dass im Inneren des Rohlings wendelförmige Ausnehmungen gebildet werden.

Die in den zylindrischen Kanal hineinragenden Teile der Fadenhalterelemente 3 und 4 sind vorzugsweise zu- und/oder abflussseitig verjüngend ausgebildet, um die innerhalb der Pressdüse auftretende Reibung zu verringern.

Die Fäden 6 und 7 sind vorzugsweise an ihren Enden mit Abschlussstücken versehen, durch welche der Durchmesser der Ausnehmung im zylindrischen Körper bestimmt wird. Die Querschnittsfläche der Fäden und/oder die Querschnittsfläche der Abschlussstücke kann rund oder nichtrund sein. Dies ermöglicht beispielsweise eine optimale Anpassung der Kühlkanäle eines Bohrwerkzeugs an die Spankammern des Bohrwerkzeugs, die im Laufe der Weiterverarbeitung des Rohlings in das Bohrwerkzeug eingebracht werden.

Bei den obigen Ausführungsbeispielen wurde stets eine Trägervorrichtung beschrieben, deren Trägerelemente Fadenhalterelemente sind, an welchen jeweils ein Faden befestigt ist.

Alternativ dazu kann die Trägervorrichtung auch mit Kanälen versehene Trägerelemente aufweisen, durch welche flüchtiges Füllmaterial in den Massestrom einpressbar ist. Auch diese Kanäle können rund oder nichtrund ausgebildet sein, um die Querschnittsform der späteren Innenausnehmungen in gewünschter Weise vorzugeben. Das flüchtige Füllmaterial wird von außen durch eine Zuleitung in den Kanal des jeweiligen Trägerelementes gebracht. Es dient als eine Art Platzhalter für die späteren Innenausnehmungen und wird in einem nachgeschalteten Prozess aus den Innenausnehmungen entfernt. Beispielsweise wird durch ein Erwärmen eine Verflüssigung des Füllstoffs erreicht, welcher dann aus den Innenausnehmungen herausfließt, ohne dass dabei weitere Veränderungen der Form des zylindrischen Körpers auftreten.

### Bezugszeichenliste:

- 1: Sich verschmälernder Bereich der Pressdüse
- 2: Düsenmundstück
- 3: Fadenhalterelement
- 4: Fadenhalterelement
- 5: Endbereich des Düsenmundstücks
- 6: Faden
- 7: Faden
- 8: plastische Masse
- 9: zylindrischer Körper
- 10: Sensor
- 11: Einstelleinheit

- P: Pressdüse
- r: Radialrichtung
- s: Einstellsignal
- x: Pressrichtung

## Patentansprüche

1. Strangpresswerkzeug zur Herstellung eines aus plastischer Masse bestehenden zylindrischen Körpers (9), der mindestens eine in seinem Inneren verlaufende Ausnehmung hat, mit
- einer Pressdüse (P) mit einem sich verschmälernden Bereich (1) und einem Düsenmundstück (2), welches einen zylindrischen Kanal bildet, und
- einer Trägervorrichtung, an welcher eine der Anzahl der Innenausnehmungen entsprechende Anzahl von Fäden befestigt ist oder welche eine der Anzahl der Innenausnehmungen entsprechende Anzahl von Kanälen zum fadenförmigen Einpressen eines flüchtigen Füllmaterials in den Massestrom aufweist,
wobei
- die Trägervorrichtung aus einer der Anzahl der Innenausnehmungen entsprechenden Anzahl von Trägerelementen (3, 4) besteht und
- jedes der Trägerelemente (3, 4) im Bereich des Düsenmundstücks (2) oder in dem sich verschmälernden Bereich an der Pressdüse befestigt ist, **dadurch gekennzeichnet, dass** jedes der Trägerelemente (3, 4) in Radialrichtung verstellbar ist.

2. Strangpresswerkzeug nach Anspruch 1,
**dadurch gekennzeichnet, dass**
die radiale Verstellbarkeit jedes der Trägerelemente (3, 4) durch ein Gewinde oder einen Stellantrieb gegeben ist.

3. Strangpresswerkzeug nach einem der vorhergehenden Ansprüche,
**dadurch gekennzeichnet, dass**
jedes der Trägerelemente (3, 4) stiftförmig ausgebildet ist und durch eine Bohrung in der Pressdüse (P) geführt ist.

4. Strangpresswerkzeug nach einem der vorhergehenden Ansprüche,
**dadurch gekennzeichnet, dass**
das Düsenmundstück (2) einen Endbereich (5) aufweist, der zur Erzeugung eines wendelförmigen Verlaufs der mindestens einen Innenausnehmung relativ zum sich verschmälernden Bereich (1) der Pressdüse (P) verdrehbar ist.

5. Strangpresswerkzeug nach einem der vorhergehenden Ansprüche,
**dadurch gekennzeichnet, dass**
es einen Sensor (10) aufweist, der zur Ermittlung des Abstands der mindestens einen Innenausnehmung des Körpers von dessen Oberfläche vorgesehen ist, dass die Ausgangssignale des Sensors einer Einstelleinheit (11) zugeführt sind und dass die Einstelleinheit (11) zur radialen Verstellung der Trägerelemente (3, 4) in Abhängigkeit vom ermittelten Abstand vorgesehen ist.

6. Strangpresswerkzeug nach einem der vorhergehenden Ansprüche,
**dadurch gekennzeichnet, dass**
die in den zylindrischen Kanal hineinragenden Teile der Trägerelemente (3, 4) sich zu- und/oder abflussseitig verjüngend ausgebildet sind.

7. Strangpresswerkzeug nach einem der vorhergehenden Ansprüche,
**dadurch gekennzeichnet, dass**
die Trägerelemente (3, 4) Fadenhalterelemente sind, an welchen jeweils ein Faden (6,7) befestigt ist.

8. Strangpresswerkzeug nach Anspruch 7,
**dadurch gekennzeichnet, dass**
jeder Faden eine runde oder nichtrunde Querschnittsfläche aufweist und/oder mit einem runden oder nichtrunden Abschlussstück versehen ist.

9. Strangpresswerkzeug nach einem der vorhergehenden Ansprüche,
**dadurch gekennzeichnet, dass**
die Kanäle eine runde oder nichtrunde Querschnittsfläche aufweisen.

## Claims

1. Extruder for producing a cylindrical body (9), which consists of a plastic mass and which has at least one recess extending in its interior, comprising
- an extruder nozzle (P) with a narrowing region (1) and a nozzle mouthpiece (2), which forms a cylindrical channel, and
- a support device to which a number - corresponding with the number of internal recesses of threads - is fastened or which has a number - corresponding with the number of internal recesses - of channels for thread-shaped pressing of a volatile filling material into the mass flow,
wherein
- the support device consists of a number of support elements (3, 4) corresponding with the number of internal recesses and
- each of the support elements (3, 4) is fastened in the region of the nozzle mouthpiece (2) or in the narrowing region to the extruder nozzle,
**characterised in that** each of the support elements (3, 4) is adjustable in radial direction.

2. Extruder according to claim 1, **characterised in that** the radial adjustability of each of the support elements (3, 4) is given by a thread or a setting drive.

3. Extruder according to one of the preceding claims, **characterised in that** each of the support elements (3, 4) is of pin-shaped construction and is guided through a bore in the extruder nozzle (P).

4. Extruder according to any one of the preceding claims, **characterised in that** the nozzle mouthpiece (2) has an end region (5) which, for producing a helical course of the at least one internal recess, is rotatable relative to the narrowing region (1) of the press nozzle (P).

5. Extruder according to any one of the preceding claims, **characterised in that** it comprises a sensor (10), which is provided for determining the spacing of the at least one internal recess of the body from the surface thereof, that the output signals of the sensor are fed to a setting unit (11) and that the setting unit (11) is provided for radial adjustment of the support elements (3, 4) in dependence on the determined spacing.

6. Extruder according to any one of the preceding claims, **characterised in that** the parts of the support elements (3, 4) protruding into the cylindrical channel are formed to narrow at the inflow side and/or outflow side.

7. Extruder according to any one of the preceding claims, **characterised in that** the support elements (3, 4) are thread-holding elements to each of which a respective thread (6, 7) is fastened.

8. Extruder according to claim 7, **characterised in that** each thread has a round or non-round cross-sectional area and/or is provided with a round or non-round connecting member.

9. Extruder according to any one of the preceding claims, **characterised in that** the channels have a round or non-round cross-sectional area.

## Revendications

1. Outillage d'extrusion pour la fabrication d'un corps cylindrique (9) formé d'une masse plastique et qui présente au moins un évidement s'étendant à l'intérieur de lui-même, comprenant :
- une buse de presse (P) avec une zone (1) qui va en se rétrécissant et une embouchure de buse (2), qui forme un canal cylindrique, et
- un dispositif porteur, auquel sont fixés un nombre de fils qui correspondent au nombre des évidements intérieurs, ou bien qui présentent un nombre de canaux correspondant au nombre des évidements intérieurs, pour injecter à la presse un matériau de remplissage volatile dans le courant de masse, en formant des fils,
dans lequel
- le dispositif porteur est constitué par un nombre d'éléments porteurs (3, 4) qui correspond au nombre des évidements intérieurs, et
- chacun des éléments porteurs (3, 4) est fixé à la buse de presse dans la zone de l'embouchure de buse (2) ou dans la zone qui va en se rétrécissant,
**caractérisé en ce que** chacun des éléments porteurs (3, 4) est réglable en direction radiale.

2. Outillage d'extrusion selon la revendication 1,
**caractérisé en ce que** la possibilité de réglage radial de chacun des éléments porteurs (3, 4) est définie par un pas de vis ou par un entraînement de positionnement.

3. Outillage d'extrusion selon l'une des revendications précédentes,
**caractérisé en ce que** chacun des éléments porteurs (3, 4) est réalisé à la manière d'une tige, et est guidé à travers un perçage dans la buse de presse (P).

4. Outillage d'extrusion selon l'une des revendications précédentes,
**caractérisé en ce que** l'embouchure de buse (2) comporte une zone terminale (5) qui, pour produire un tracé en forme d'hélice dudit au moins un évidement intérieur par rapport à la zone (1) de la buse de presse (P) qui va en se rétrécissant, est capable de tourner.

5. Outillage d'extrusion selon l'une des revendications précédentes,
**caractérisé en ce qu'**il comprend un capteur (10) qui est prévu pour déterminer la distance dudit au moins un évidement intérieur du corps vis-à-vis de sa surface,
**en ce que** les signaux de sortie du capteur sont amenés à une unité de réglage (11), et **en ce que** l'unité de réglage (11) est prévue pour le réglage radial des éléments porteurs (3, 4) en fonction de la distance déterminée.

6. Outillage d'extrusion selon l'une des revendications précédentes,
**caractérisé en ce que** les parties des éléments porteurs (3, 4) qui pénètrent dans le canal cylindrique sont réalisées de manière à se rétrécir du côté arrivée et/ou du côté sortie.

7. Outillage d'extrusion selon l'une des revendications précédentes,
**caractérisé en ce que** les éléments porteurs (3, 4) sont des éléments de maintien de fil, sur lesquels est fixé respectivement un fil (6, 7).

8. Outillage d'extrusion selon la revendication 7,
**caractérisé en ce que** chaque fil présente une surface transversale ronde ou non et/ou est pourvu d'une pièce de raccordement ronde ou non.

9. Outillage d'extrusion selon l'une des revendications précédentes,
**caractérisé en ce que** les canaux présentent une surface transversale ronde ou non.
